# EUROPEAN PATENT APPLICATION

(11) **EP 2 543 293 A1**
(43) Date of publication of application: **09.01.2013**
(21) Application number: 12175414.7
(22) Date of filing: 06.07.2012
(51) Int. Cl.: A47J 43/07

(54) **Soup preparation apparatus**

(30) Priority: 08.07.2011 GB 201111677
(71) Applicant: Cambridge Design Research LLP, Cambridge, Cambridgeshire CB23 2RF (GB)
(72) Inventor: Cane, Michael Roger, Cambridge, Cambrigdeshire CB23 2RF (GB); Radcliffe, Ian Alexander James, Cambridge, Cambridgeshire CB23 2RF (GB); Curtis, Robert Andrew, Cambridge, Cambrigdeshire CB23 2RF (GB); Strutt, Benjamin John, Cambridge, Cambridgeshire CB23 2RF (GB); Scott, Paul, Cambridge, Cambridgeshire CB23 2RF (GB)
(74) Representative: Martin, Philip John

(57) **Abstract**

A soup or puree preparation system is described for preparing liquidised food such as soup or pureed food. The system comprises a base unit and a cooker unit. The cooker unit comprises a motor-driven blender and an electrical heater, the base unit comprises a cooking / serving vessel holding a set of ingredients and having a removable or breakable cover over the set of ingredients in the vessel. The base unit bears identification data for said set of ingredients and is adapted to engage with the cooker unit such that the cooker unit is useable to blend and heat the set of ingredients by means of the blender and heater to make a soup or puree from the set of ingredients. The base unit is further useable for serving the soup or puree by disengaging the cooker unit from the base unit.

## Description

### FIELD OF THE INVENTION

This invention relates to apparatus for preparing liquidised food such as soup and pureed food.

### BACKGROUND TO THE INVENTION

Liquidised food is popular in the form of soup and puréed food (e.g. baby food) because it is both sustaining and easy to digest. Soup and Baby food are foods that are made by combining ingredients such as meat and vegetables with stock, juice, water or another liquid. Hot soups are additionally characterized by boiling solid ingredients in liquids in a pot until the flavour is extracted, forming a broth. It is available in many formats with the aim of making storage and preparation by the consumer more convenient. The liquid food is prepared and then processed for packaging. These packaging forms include dried, canned (sterilised in the packaging) and aseptic (sterilised then packed) packaging systems. The disadvantage of soups and baby food that have been prepared in a factory is that the consumer cannot be sure of the ingredients or their quality at the point of sale. Another disadvantage is that there is no possibility for flexibility in the recipe to reflect the consumer's taste, this only being possible if the food is prepared by the consumer themselves. Another disadvantage is that the packaging system used may adversely affect the taste and texture of the food when served.

There is therefore a present desire for consumers to know what is in their food and where it has come from (provenance). This is from a desire to eat both healthy and quality goods, but also from an economical and environmental objective of ensuring a reduced carbon footprint by sourcing locally grown/prepared goods.

There is therefore the desire for an improved system for conveniently preparing liquidised food including soups and pureed food such as baby food.

### SUMMARY OF THE INVENTION

According to a first aspect of the invention there is provided a soup or puree preparation system, comprising: a base unit and a cooker unit, the cooker unit comprising a motor-driven blender and an electrical heater, the base unit comprising a cooking / serving vessel holding a set of ingredients and having a removable or breakable cover over said the of ingredients in the vessel, wherein the base unit bears identification data for the set of ingredients, wherein the base unit is adapted to engage with the cooker unit such that the cooker unit is useable to blend and heat the set of ingredients by means of the blender and heater to make a soup or puree from the set of ingredients, and wherein the base unit is further useable for serving the soup or puree by disengaging the cooker unit from the base unit.

The soup or puree preparation system provides users with a simple and convenient means of cooking and preparing fresh liquidised food (soup, puree and the like) and drinks from separate ingredients supplied pre-packed and sealed in a container by a manufacturing company so that the ingredients stay fresh. The advantage is that the user can see the quality of the raw ingredients at the point of sale. The user can then adjust the recipe by removing or adding some of the ingredients before preparation. The container (the base unit) also forms the bowl or vessel from which the user consumes the food. After removing or breaking the cover (or seal), a user adds water to the base unit then attaches the cooker unit (providing the blender and heater) to the base unit (the consumable) the consumer has purchased so that the food is prepared directly in the purchased packaging, thereby eliminating the need for any further cooking apparatus. The base unit also bears identification data for the set of ingredients, including a list of ingredients and cooking instructions for the particular ingredients.

In preferred embodiments there is further provided a set of said base units each holding a different set of said ingredients. A provider of the consumable (the base unit) may then tailor the identification data on each of the different base units according to each set of ingredients provided with a base unit.

In preferred embodiments of the soup or puree preparation system the base unit further comprises cooking data storage means storing data defining a cooking process for the set of ingredients, and wherein the cooker unit further comprises reading means to read the cooking data storage means and control circuitry to operate the blender and heater to blend and heat the set of ingredients according to the cooking process for the set of ingredients.

Providing such cooking data storage means allows the manufacture or producer of the container / ingredients supplier to provide data on or within the container defining how the ingredients are to be prepared (blending and / or cooking times and optionally temperature and the like) advantageously enabling the cooking and blending to be tailored to the particular product being prepared from the ingredients. This data may then be read by the cooker unit to control the blender and heater.

In some embodiments of the soup or puree preparation system the base unit further comprises cooking data, and wherein the cooker unit further comprises means to input the cooking data, and wherein the cooker unit is configured to blend and cook the set of ingredients according to said cooking data. In such an embodiment the cooking data on the base unit may comprise a series of operations, temperatures, heating times and the like for input into the cooker unit for controlling operation of the blender and heater.

In embodiments of the soup or puree preparation system the cooking data storage means comprises one or more recesses and/or protrusions on the base unit, and the reading means comprises one or more plungers coupled to one or more respective switches to detect the recesses and/or protrusions on the base unit. When the cooker unit engages with the base unit the recesses and/or protrusions are detected so that cooking process information is provided to the control circuitry. In an alternative embodiment the recesses and/or protrusions are replaced by a bar code on the container / base unit storing data defining the cooking process. A bar code reader (e.g. an optical sensor) is provided within the cooker unit which can be used to read the bar code provided on the container / base unit. In another alternative embodiment an RFID tag/chip is attached to or embedded within the container / base unit to store the cooking data and the cooker unit comprises an RFID reader to read the cooking data from the RFID tag. In yet another alternative embodiment cooking data a magnetic strip is used to store the cooking data and the cooker unit comprises a magnetic strip reader to read the cooking data from the magnetic strip.

In preferred embodiments the motor-driven blender comprises a retractable blade (or blades). Preferably, the retractable blade is moveable between a retracted position wherein the blade is substantially enclosed in a protective housing of the cooker unit and a deployed position wherein the blade is operable to blend the set of ingredients. This provides a safety feature preventing the blades being accessible to the user when the device is not in operation / removed from the base unit.

In some preferred embodiments the retractable blade moves between the retracted position and the deployed position dependent on activating the motor-driven blender. The blade(s) may open automatically when blending commences, then fold back / retract in to the enclosure once blending has finished. This eliminates the need for further motorised features to retract/deploy the blade(s) and/or any user interaction to retract/deploy the blade(s).

In preferred embodiments the electrical heater is located on or in a shaft of the motor-driven blender, thereby integrating the blending and heating into a single unit. In embodiments, therefore, the heater may be mounted in a shroud around the drive shaft of the blender.

In some preferred embodiments of the soup or puree preparation system the cooker unit comprises an orientation detector to determine the orientation of the cooker unit. Control circuitry further controls the blender and heater according to an orientation of the cooker unit determined by the orientation detector. This allows the soup and puree preparation system to prevent or cease operation should the unit be knocked over or not standing with the cooker unit positioned above the base unit.

In some preferred embodiments the blender-cooker further comprises an electrical hot plate to fry one or more of the set of ingredients, the electrical hot plate being mounted under an upper surface of the cooker unit, and wherein the control circuitry operates the electrical hotplate according to an orientation of the cooker unit determined by the orientation detector. The orientation detector can therefore be used as an additional input to the cooking process information in combination with the cooking data such that the user may be first guided to fry component parts of the ingredients (for example, a meat element of the ingredients) by turning the cooker portion upside down so that the blender element points upwards relative to the base unit. The hot plate can then be used as a frying platform.

In preferred embodiments of the soup or puree preparation system the base comprises an interlock to enable the blender and heater, the enabling dependent on the cooker unit being securely engaged with the base unit. This prevents the blender and heater from being activated until the cooker unit and base unit are securely attached to one another. As described above, such activation may be further controlled by means of an orientation detector to prevent activation (or to deactivate if already in operation) of the blender and heater should the apparatus be knocked over.

We describe a container for the preparation of soup or puree, in particular for use in the soup or puree preparation system as described in the above aspects of the invention, the container comprising a vessel for preparing soup or puree from a set of ingredients placed in the vessel, wherein the container further comprises cooking data storage means defining a cooking process for the set of ingredients placed in the vessel. Preferably the vessel is further useable for serving the soup or puree.

Providing such cooking data storage means allows the manufacture or producer of the container / ingredients supplier to provide data on or within the container defining how the ingredients are to be prepared (blending and / or cooking times and optionally temperature and the like) advantageously enabling the cooking and blending to be tailored to the particular product being prepared from the ingredients. This data may then be read by the cooker unit to control the blender and heater.

In preferred embodiments the contain stores the set of ingredients placed in the container, and further comprising a cover over the set of ingredients placed and stored in the vessel, thus the container is provided to the user with the ingredients already included. The user breaks/removes the cover, adds or removes seasoning or ingredients as necessary, adds water if needed then attaches their cooker unit to the container. The cooker unit reads the recipe from the container and prepares the soup or puree automatically.

In preferred embodiments of the container the cooking data storage means comprises: one or more recesses and/or protrusions on the base unit; or a bar code; or an RFID chip; or a magnetic strip. Such data storage means can then be ready by a respective reader on the cooker unit (i.e. one or more plungers; bar code reader; RFID reader; magnetic strip reader respectively).

According to a further aspect of the invention there is provided a soup or puree maker, comprising an integrated blender and heater, in particular as described in any of the above aspects, for use with a container comprising a vessel for preparing soup or puree from a set of ingredients placed in the vessel, the vessel being further useable for serving the soup or puree, wherein the soup or puree maker comprises a motor-driven blender and an electrical heater located on or in a shaft of the blender to cook ingredients in the container via the shaft. The blending and heating components may therefore be integrated into a single unit. In embodiments, therefore, the heater may be mounted in a shroud around the drive shaft of the blender.

In preferred embodiments the soup or puree maker further comprises: reading means to read cooking data storage means from a container, the cooking data storage means storing cooking process data defining a cooking process for a set of ingredients, and a blender and heater controller having control circuitry to operate the blender and heater to blend and heat the set of ingredients food according to the cooking process data.

The cooking process data is read from a container / base unit by the cooker unit and then used by the controller to control the blending and heating according to this data thereby allowing both the sequence and duration of cooking operations to be controlled according to the cooking process data (which may vary depending on the nature of the ingredients and recipe).

In some preferred embodiments the reading means comprises one or more plungers coupled to one or more respective switches to detect recesses and/or protrusions when engaged to a container comprising the one or more recesses and/or protrusions, the recesses and/or protrusions on the container storing the data defining a cooking process for a set of ingredients. One or more recesses and/or protrusions may be detectable according to the number of plungers used. The encoding may be binary for example, so that one plunger may detect two different cooking processes; two plungers detecting four cooking processes etc.

In some preferred embodiments the soup or puree maker, in particular having an integrated blender and heater, further comprises a retractable blade (or blades) moveable between a retracted or folded position wherein the blade is substantially enclosed in a protective housing of the integrated heater and blender and a deployed or unfolded position wherein the blade is operable to blend food products in the liquid. This provides a safety feature preventing the blades being accessible to the user when the device is not in operation. The blade(s) may open automatically when blending commences, then retract in to the enclosure once blending has finished. This eliminates the need for further motorised features to fold/unfold the blade(s) and/or any user interaction to fold/unfold the blade(s).

According to a yet further aspect of the invention there is provided a soup or puree making apparatus, in particular as described in any of the previous aspects, for use with a container, the container comprising a vessel for preparing soup or puree from a set of ingredients placed in the vessel, the vessel being further useable for serving the soup or puree, the container further comprising cooking data storage means defining a cooking process for the set of ingredients placed in the vessel, the soup or puree making apparatus comprising a motor-driven blender and an electrical heater, and further comprising reading means to read the cooking data storage means from said container, and a blender and heater controller having control circuitry to operate the blender and heater according to the cooking process data.

The resulting soup or puree could be served from the soup or puree making apparatus or from the vessel originally containing the ingredients.

The blender and heater apparatus reads cooking process data from a container / base unit. This is used by the controller to control the blending and heating according to this data thereby allowing both the sequence and duration of cooking operations to be controlled according to the cooking process data (which may vary depending on the nature of the ingredients and recipe). A user may typically purchase a container with the fresh ingredients included, then adding a further ingredient such as water to the pot. The soup or puree making is then attached to the container to cook / heat the water according to the cooking process data.

The cooking data storage means may comprise recesses and/or protrusions on the container / base unit; or alternatively a bar code may be used, the blender and heater comprising a bar code reader to read the cooking data stored on the bar code. Alternatively an RFID tag may be used, the blender and heater comprising an RFID reader to read the cooking data stored on the bar code. Alternatively a magnetic strip may be used, the blender and heater comprising a magnetic strip reader to read the cooking data stored on the magnetic strip.

The apparatus may also be run upside down with respect to the embodiment described herein, with the base unit mounted on top of the cooker unit when the blender and heater are cooking the ingredients to prepare the soup or puree. The soup or puree could be served in the blender.

We further describe a container for the preparation of soup or puree, in particular for use in the soup or puree preparation system as described in other aspects of the invention, the container comprising a vessel for preparing soup or puree, and a lid, wherein the lid is engageable with the vessel to form a seal with the vessel; and wherein the lid comprises a cap having a formation arranged to project down into the vessel away from the cap when the lid is engaged with the vessel; wherein the formation has an aperture for filling the vessel when the lid is engaged, and wherein the formation is configured such that when the lid is engaged with the vessel as the vessel is filled with liquid there is a liquid level below the top of the vessel at which an air pocket is formed between the formation and an inner wall of the vessel trapping air therebetween and inhibiting further filling of the vessel.

The lid advantageously provides a fill limit on the vessel, forming an air pocket between the formation and inner walls of the vessel under the lid to prevent further filling of the vessel. This provides both a safety measure to the user and also ensures that any subsequent insertion of the cooker unit (to blend and cook any ingredients in the container) does not result in any overflow. To provide the seal between the lid and the vessel, the lid may snap-fit onto the vessel.

The formation may have the shape of an inverted cone truncated to form the aperture, in other words, the radius of the formation may narrow the further it projects down into the vessel to provide a wide aperture at the top (about the cap) for ease of filling by a user, but narrowing to increase the volume available to form the air pocket.

On the outer surface of the cover, the lid may also have an openable seal to cover the aperture, thereby covering up any food items in to the container until the seal or lid is removed.

The thickness of a side wall of the cone may taper towards the aperture resulting in the walls of the formation weakening towards the aperture. Thus, when a pressure is applied to the formation, the cone may preferentially deform or break around the aperture which enables the air pocket to vent out. This vent is particularly useful in preparation for insertion of the cooker unit (which will result in the water level rising as the vessel space is occupied by heating/blending elements.).

In a variation to the above vent, the lid may further comprise a vent from the air pocket to an outer surface of the lid. This may be in the form of a covered hole, covered by an openable seal for example to allow the air pocket to vent. In another variant the lid may have a breakable region (for example, formed from a weaker/thinner material or be partially cut) that can be broken to form the vent.

The cooking data storage means on the container may comprise: one or more recesses and/or protrusions on said base unit; or a bar code; or an RFID chip; or a magnetic strip.

We also describe a method of controlling the depth to which a vessel is filled, the method comprising: providing a vessel with a lid, wherein the lid has a formation projecting down into the vessel and an aperture for filling the vessel; filling the vessel with liquid through the aperture until the liquid level rises to a level at which an air pocket is formed between the formation and an inner wall of the vessel inhibiting further filling of the vessel; and controlling the depth of said filling by controlling the depth which an air path through the formation to said aperture exists.

In other words, the lid comprises a formation that projects into the vessel, having an aperture to allow filling of the vessel. Forming a seal between the lid and vessel prevents (or minimises) air escape, allowing an air pocket to be formed between the formation and inner walls of the vessel. By controlling the depth of an air path through the formation to the aperture, the filling depth can be controlled.

The method may further comprise controlling a distance to which the formation projects down into the vessel, which allows further control of the depth of the air path through the formation.

The method may further comprise venting the air pocket to permit further filling of the vessel. In other words, the air can be vented, using, for example, an openable vent on the lid or by any of the means described in the preceding aspects of the invention. Such a vent is useable to allow the fill level to rise when the blender/heater portion of a cooker unit needs to be inserted into the container whilst retaining use of the lid.

### BRIEF DESCRIPTION OF THE DRAWINGS

These and other aspects of the invention will now be further described, by way of example only, with reference to the accompanying figures in which:
Figure 1 shows the base unit with lid, cover and ingredients, and the cooker unit;
Figure 2 shows the cooker unit of Figure 1 and the base unit of Figure 1 being attached;
Figure 3 shows the cooker unit of Figure 1 with the base unit of Figure 1 attached;
Figure 4 shows further details of the cooker unit of Figure 1 including retractable blades, tubular heating element, display and start button;
Figure 5 shows the cooker unit of Figure 1 inverted showing further details including the heater plate and bulkhead;
Figure 6 shows a closer view of the heater plate and bulkhead of Figure 5, including the bayonet fitting, interlocks, plungers and a section of an edge feature of the base unit showing a recess corresponding to a plunger;
Figure 7 shows further details of the interlock mechanism of Figure 6;
Figure 8 shows the display on the cooker unit of Figure 1 including orientation requirement and timer;
Figure 9 shows further details of the retracting blade mechanism of Figure 4 activated by the motor spindle;
Figure 10 shows details of a lid incorporating a filling feature to increase the ease with which the base unit can be filled with water to the required level by trapping air in the base unit;
Figure 11 shows a means of releasing the air trapped by the filling feature described in

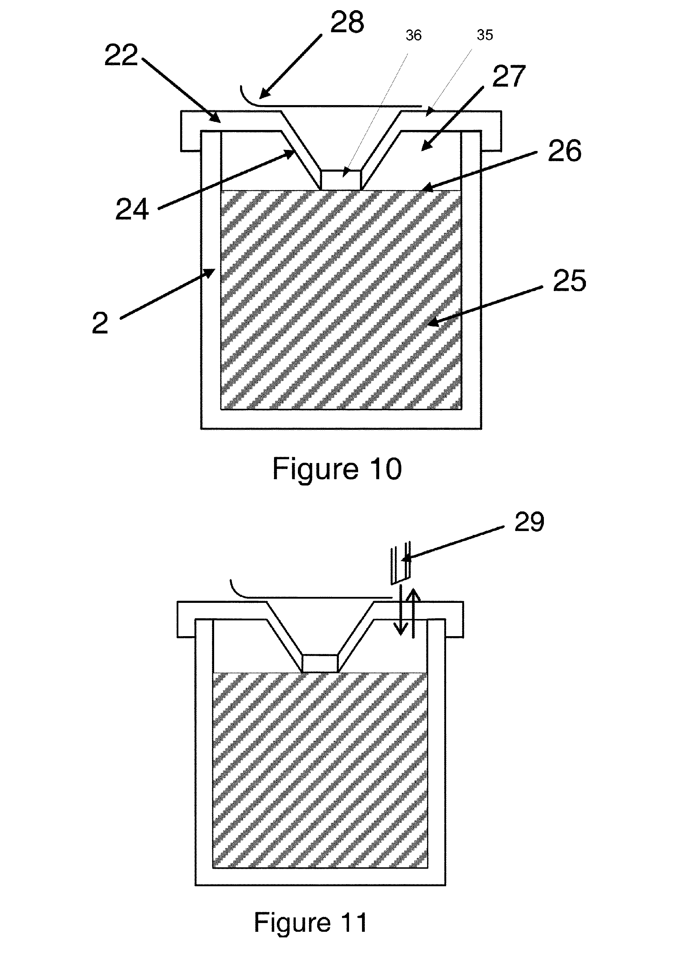

Figure 10 by piercing the base unit snap on lid;

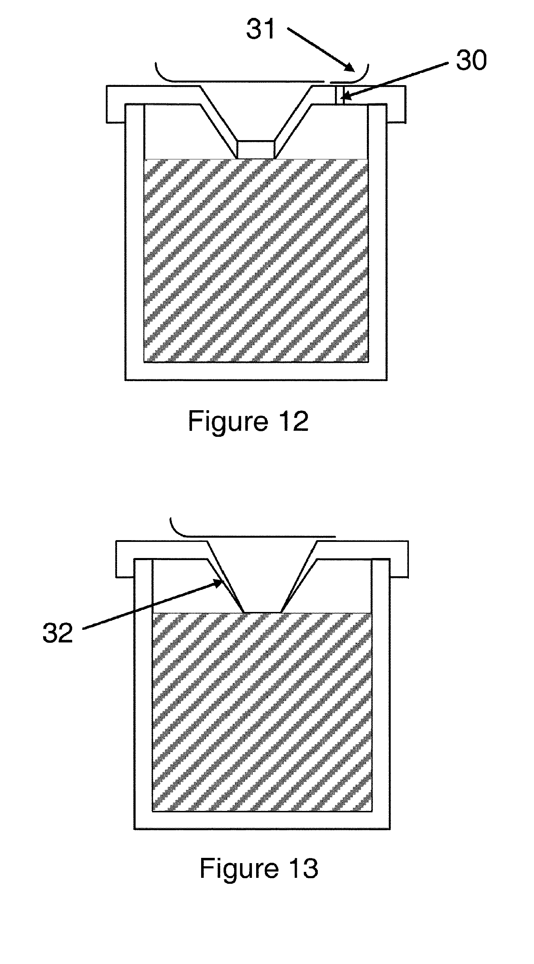

Figure 12 shows a means of releasing the air trapped by the filling feature described in
Figure 10 by removing a seal that covers a vent on the base unit snap on lid; and
Figure 13 shows a means of releasing the air trapped by the filling feature described in
Figure 10 by designing a weakness into the base unit snap on lid

### DETAILED DESCRIPTION PREFERRED EMBODIMENTS

This invention comprises a machine for making liquidised food or drinks that comprises two elements, a cooker unit and a base unit.

The cooker unit contains a heater to boil liquid and a set of rotating blades connected to a motor designed to break up solid pieces of food which are inserted into the base unit. It also contains a means to control the operation of the heater and blades to a predetermined sequence and timing. The cooker unit may also contain a second heater designed to pre-cook some of the ingredients when it is inverted. The cooker unit contains a sensor which detects the presence of the base unit and inhibits the operation of the cooker unit if the base unit is not present. The cooker unit may have blades that retract into a protective housing when they are not in operation so users are protected from the sharp blades when handling the cooker unit.

The base unit comprises of a container labelled with the name of the food recipe and contain the appropriate ingredients which attaches temporarily to the cooker unit and performs three functions; the packaging for the ingredients to protect and enhance their shelf life, a container that attaches to the cooker unit and contains the ingredients during preparation, and the container from which the food can be consumed. The base unit contains a breakable cover to maintain the freshness of the ingredients during distribution which can be removed before connection to the cooker unit. The base unit contains features which interlock with the cooker unit and hold the parts together during the preparation process as well as trigger sensors on the cooker unit to energise the appropriate preparation process for the recipe. The ingredients may include vegetables, meat, flavourings, fat and other foodstuffs. The base unit may be manufactured of plastic (or cardboard for example) and may be disposable / recyclable.

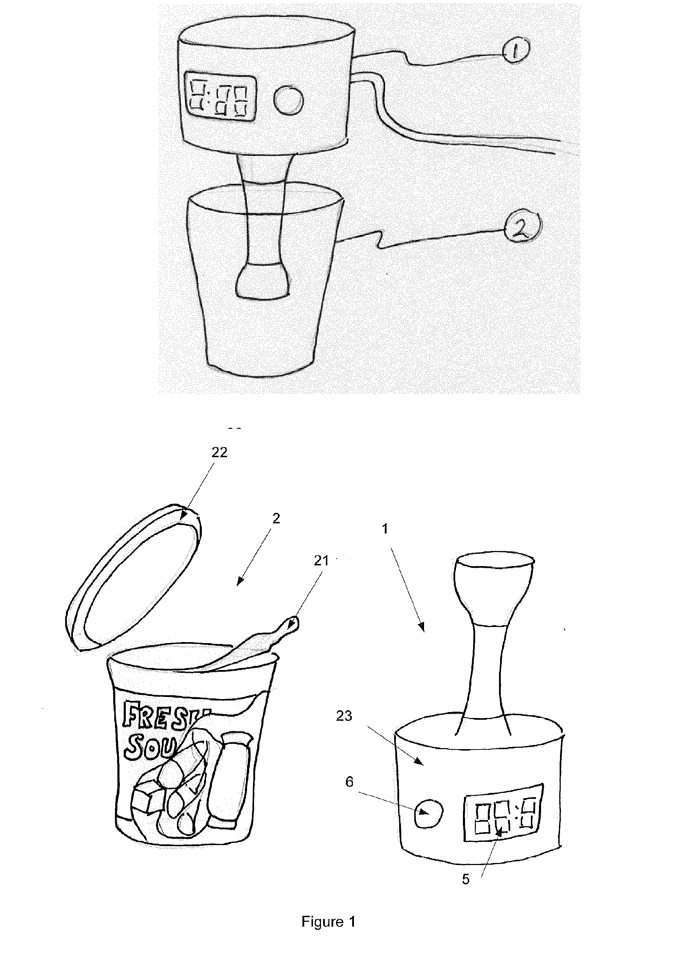

Figure 1 shows the cooker unit 1 and the base unit 2 containing the ingredients. The base unit 2 comprises a tear-off seal/cover 21 to ensure the contents are in a gas tight environment to maximise shelf life. A secondary snap on lid 22 is also provided which can be used to reseal the base unit if the cooked food is to be stored. Optionally the tear-off seal may not be needed, and only a replaceable cover or lid may be provided. The cooker unit comprises a head unit 23 containing a motor and control system. The cooker unit is operated by pressing the start button 6. The display 5 shows the progress of the cooking process.

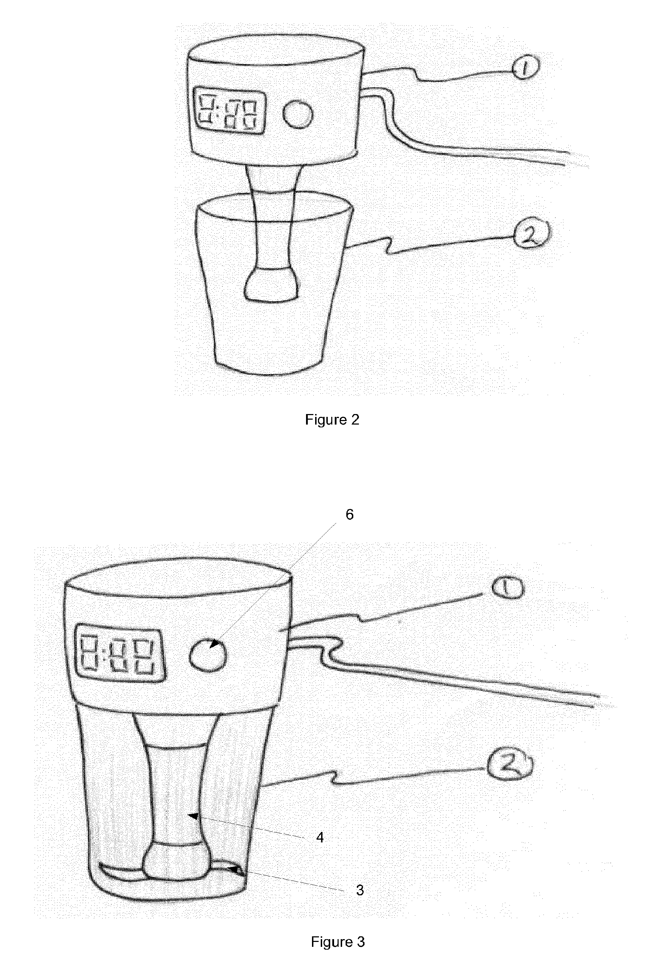

The user removes the lid and cover from the base unit and adds water to a mark on the base unit. The cooker unit is inserted into the base unit as shown in Figure 2 and locked in place by a bayonet fixing as shown in figure 3. The user initiates the cooking by pressing the start button 6. The control system first boils the liquid for a predetermined time using the heating element 4 and then switches off the heating element. The motor is then energised to activate the rotating blades 3 to perform the blending function so that the cooked food is liquidised. The display indicates the status of the cooking process and the time remaining until the food is ready. When the motor stops the food is ready to be served by removing the cooker unit.

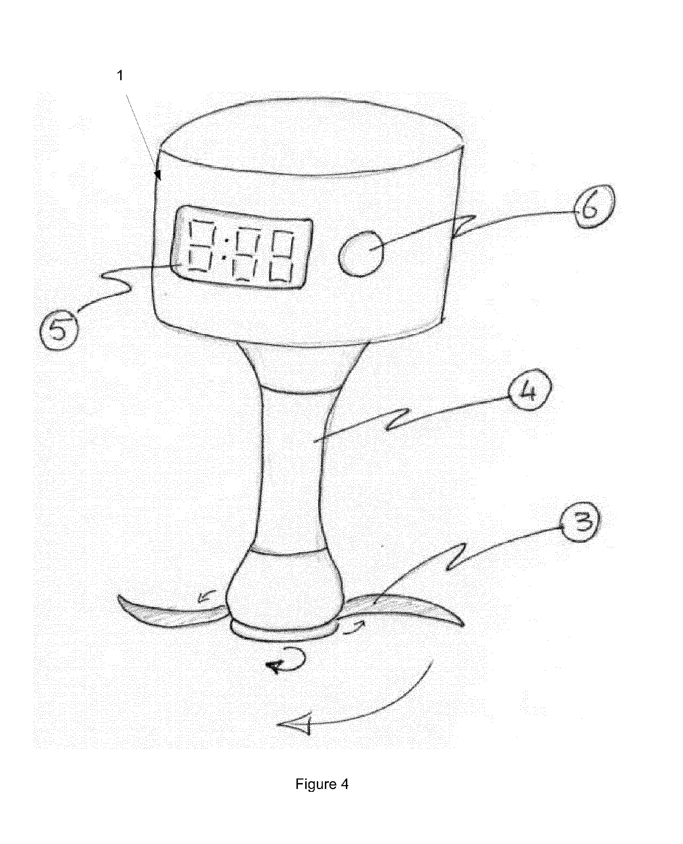

Figures 4 shows the cooker unit 1 comprising the heating element 4 mounted around the axle of the rotating blades 3.

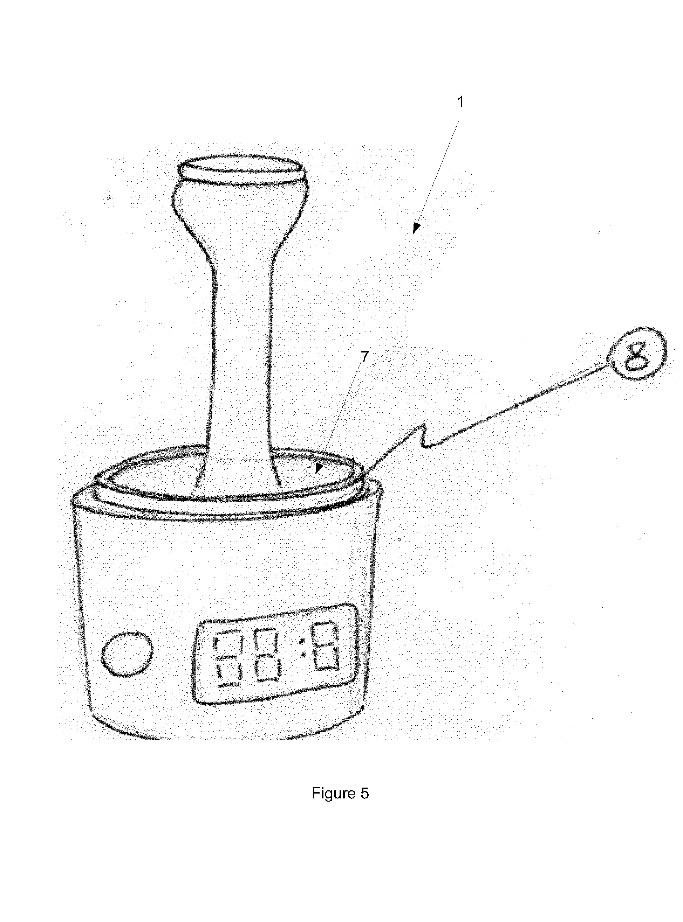

Figure 5 shows the cooker unit 1 inverted. The wall 8 surrounds a second option recessed heating element 7 which may be used to pre cook selected ingredients.

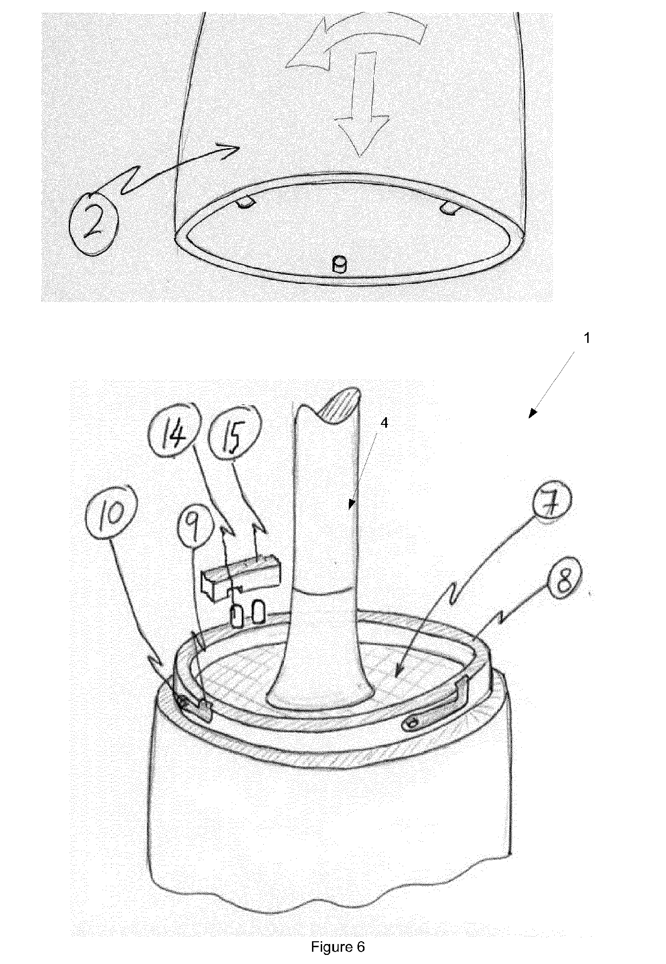

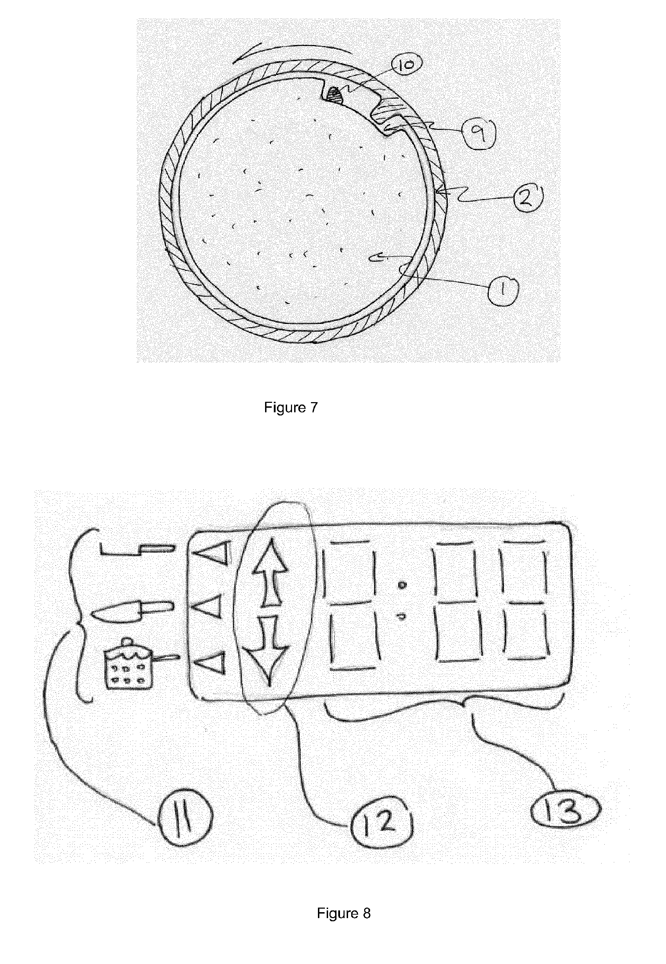

Figure 6 shows the underside of the cooker unit with the connection / interlock 9 for connecting to the base unit 2. In the embodiment shown the connection is by a bayonet type fitting 9 with a moveable protrusion 10 within the bayonet track that is depressed when the base unit 2 is attached. The protrusion 10 operates a sensor switch in the cooker unit which indicates to the control system that the base unit is in place and the cooking process may proceed safely. Further details of the interlock mechanism are shown in Figure 7. The wall 8 surrounding the second optional recessed heating element 7 may be used to pre cook selected ingredients. The wall ensures the ingredients and cooking juices stay inside the cooker unit. This second element may only be operated if a gravity sensor (orientation) switch indicates to the control system the unit the cooker unit is in an inverted position. Operation of this heater may also require the presence of the bottom unit to operate the interlock system in the bayonet. Alternatively, only certain features may be activated, for example the recessed heating element 7 may be operable but the heating element 4 and rotating blades 3 may not be useable without the base unit engaging with the cooker unit.

Figure 6 also shows two spring loaded plungers 14 located in the cooker unit 1. The plungers operate sensor switches which encode cooking process information (providing cooking data storage means) for the control system in the cooker unit (times and sequences of heaters and liquidising / blending) for the recipe indicated on the base unit. A process may include several timed operations of heaters and rotations of the liquidiser blades. An example of a cooking process could be:
1. The heater 7 may operate for 2 minutes to pre cook meat (when the cooker unit is inverted).
2. The pre cooked meat is added to the base unit 2, water added, the cooker unit attached to the base unit then the boiling heater 4 will operate for 20 minutes, with intermittent bursts of liquidising 3 for 5 seconds every minute.
3. This is followed by 30 seconds of liquidising to complete the process.
4. Once the cooking process is completed the cooker unit is removed from the base unit; the base unit may then be used to consume the prepared soup / puree.

It will be appreciated however that the optimum process will depend on the recipe and ingredients used to make the soup / puree. The cooking process will be determined by the manufacturer or supplier of the base unit / provider of the ingredients to package in the base unit. The cooking process is communicated to the cooker unit by a series of recesses / protrusions 15 in an edge of the base unit which interact with the plungers 14 on the cooker unit when the base and cooker units are connected together. The position of the plungers defines a digital code which operates a process programmed into the cooker unit at manufacture. This embodiment in Figure 6 shows two plungers which can encode/store four different cooking processes. More plungers could be used to increase the number of cooking processes available. The encoding/storage system may also be integrated with the interlock system to detect the presence of the base unit on the cooker unit. Alternative encoding/storage methods may include a bar code on the base unit which is read optically by the cooker unit, an RFID chip on the base unit which is read by an RFID reader on the cooker unit and a magnetic stripe on the base unit which is read by the cooker unit. It will also be appreciated that other forms of encoding/storage and readers to read such encoding/storage are possible.

Figure 8 shows the display on the cooker unit. This shows the user the time to complete the cooking process 13, which heating element is in operation 12, and the stage of the cooking process 11.

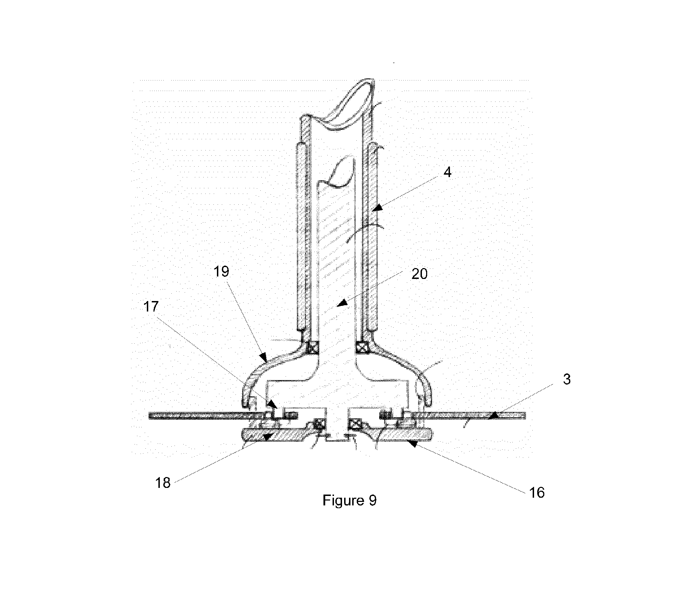

Figure 9 further details of the mechanism to retract the liquidiser blades when not in use to avoid the user touching the blades. The blade shaft 20 connects the blades 3 to the drive motor inside the cooker unit 1. The shaft cover / housing 19 is connected to the cooker unit and contains the boiling heater element 4. The blades 3 are mounted on a disk 16 that is attached to the shaft via a bearing. The blades pivot on the disk and are folded / retracted inside the diameter of the shaft cover by torsion springs, so they can not be touched by the user. The blades engage and are driven by a peg 17 on the shaft 20. The inertia of the disk and the centripetal forces on the blades means they fold out when the motor is operated. The frictional forces on the blades when in operation ensure they stay fully extended during use. When the motor stops the springs retract the blades once again.

Figure 10 shows the base unit 2 with an embodiment of the snap on lid 22, the two of which may be temporarily sealed together around the rim of the base unit to maintain the freshness of the ingredients stored in the base unit. The snap on lid has a filling feature 24 in the form of a formation that extends into the base unit from the cap portion 35 of the lid. There is an opening in this cap/spout through which water 25 can be poured to fill the container forming the vessel. When the water level 26 in the base unit rises to block an air path through the formation (such as by rising to cover aperture 36), a region of air 27 is trapped in the base unit, preventing further water from entering the base unit and preventing the base unit from being overfilled. A tear off piece of material 28 may be sealed over the filling feature (formation) in order to maintain the freshness of the ingredients in the base unit prior to preparation. This piece of material can be removed by the user prior to filling the base unit with water. The lid may also be optionally left on the base unit during cooking.

In a variant of the lid in Figure 11, an openable vent may be provided to allow the trapped air 27 to vent to atmosphere and the water level 26 to rise when the cooker unit is submerged into the water in the base unit (but preferably not beforehand to ensure the base unit is not overfilled). Three variants are shown in Figures 11, 12 and 13:
- Figure 11 shows the vent being achieved by means of a cutting, puncturing or tearing feature 29 on the cooker unit that breaks through the cap of the snap on lid. The lid may, for example, have a perforated region to ease this. The cap may be broken to form the vent either manually by a user or as the cooker unit and base unit (with the lid on) are brought together.
- Figure 12 shows the venting achieved by means of a vent 30 covered by a openable seal 31 on the snap on lid. Air is released by removing the seal.
- Figure 13 shows the venting achieved by means of a weak region 32 in the formation that fails preferentially to other parts of the formation/cap when a force is applied to the snap on lid. This may be provided, for example, by tapering the side walls of the formation so the walls are thinner towards the lower end of the formation.

The Soup/Baby food/puree maker we have described simplifies the process of making soup from raw ingredients and allows the consumer to see and control what goes into their food.

The concept we have described consists of two components:
1. The Durable (the cooker unit) - a blending / heating kitchen appliance
2. The Consumable (the base unit) - a pot containing ingredients:
   i. fresh prepared vegetables (pasteurized or stored in nitrogen to increase shelf life)
   ii. herb and spice mix
   iii. sauce sachet
   iv. meat (either pre-fried or in sealed packet to increase shelf life)

The process of preparing the soup / puree comprises the following:
- The user buys the Consumable of their choice
- The user opens the Consumable
   ○ Plastic and foil lids to allow resealing so uneaten soup may be stored and reheated
- The Consumable will contain
   ○ fresh prepared vegetables
   ○ herb and spice mix in a separate sachet
   ○ sauce sachet
   ○ meat (either pre-fried or in sealed packet)
- A separate meat frying stage may be required, in this case
   ○ the contents are removed from the consumable
   ○ the meat is taken out of its wrapping and placed in the Consumable
   ○ the Durable and Consumable are engaged and the unit is inverted (so the Durable is on the bottom)
   ○ the meat is then fried using heaters within the Durable
   ○ The unit is then reverted to the Durable being on top
- The vegetables and sachets are opened into the Consumable and 300g of water added (mark on side of consumable to gauge correct level) , or by means of a filling feature on the lid of the base unit
- The Consumable is attached to the Durable
- The consumer starts the Durable which then boils the contents of the Consumable for a preset time which is determined by the design of the consumable, and read by the durable.
- The durable then automatically blends the ingredients to form the soup
- The soup may then be served within the robust Consumable container
- The Consumable lid may be replaced to save the soup in the fridge
- The durable may be used to reheat the soup

The apparatus we have described may have a number of the following features;
- Retractable blades
   ○ The blades lie in a retracted position to allow them to be pushed through the ingredients at the start of the soup making process
   ○ Acting as a safety feature the blades only extend when the unit is running
   ○ The blades will be angled slightly to encourage circulation of the contents
   ○ The blades are retracted when the consumable is not in place and this avoids touching the sharp blades
- Boiling heating element
   ○ The shaft of the Durable features a tubular heating element which cooks (boils) the soup while is it blended
- Frying heating element
   ○ The Durable may contain heating elements to allow the user to fry meat for the soup by inverting the unit
   ○ A weight switch will tell the Durable which orientation it is in and which heater elements are to be utilised
   ○ A bulkhead around the heating plate will prevent meat juices from leaking out of the air vent
- Consumable Packaging
   ○ The container part of the unit comprises the Consumable packaging
   ○ The packaging may connect to the Durable with a Bayonet style fitting
   ○ The consumable interface may include notches which interact with switches in the durable (Interlock) to set the cooking process through a binary code.
   ○ The packaging lid may include a feature to facilitate correct filling with water. Means may be provided within the invention to vent air trapped by the filling feature when the base unit and the cooker unit are connected.
   ○ The packaging may then be recycled after use
- Inter-lock
   ○ As part of the safety system the Durable will not run unless the Consumable is locked in place
   ○ A series of switches may be used to set different programs controlling the heating and blending processes with a binary code, which program will be dependent on the Consumable container and which of the interlocks it interacts with
- User Interface may comprise the following:
   ○ On/off switch
   ○ Start button
   ○ Digital readout
      ■ Displaying current mode: frying/blending/boiling
      - Timer display (time to go)
      ■ Instructions regarding orientation or adding ingredients
   ○ Buzzer
      ■ Informs user when soup is ready
      ■ Informs user when actions required
- Durable to preferably be mains powered
- System preferably capable of producing 600g servings of soup/baby food
- A reheat function may be provided to enable the user to reheat soup and add any extra ingredients to it
- A controller / control circuitry in the cooker unit controls the blending and cooking, reading the cooking process according to the selected cooking process.

No doubt many other effective alternatives will occur to the skilled person. For example friction heating using the spinning blender shaft may be employed instead of electrical heating. It will be understood that the invention is not limited to the described embodiments and encompasses modifications apparent to those skilled in the art lying within the spirit and scope of the claims appended hereto.

Further aspects of the invention are described in the following clauses:
1. A soup or puree preparation system, comprising:
   a base unit and a cooker unit,
   said cooker unit comprising a motor-driven blender and an electrical heater,
   said base unit comprising a cooking / serving vessel holding a set of ingredients and having a removable or breakable cover over said set of ingredients in said vessel,
   wherein said base unit bears identification data for said set of ingredients,
   wherein said base unit is adapted to engage with said cooker unit such that said cooker unit is useable to blend and heat said set of ingredients by means of said blender and heater to make a soup or puree from said set of ingredients, and
   wherein said base unit is further useable for serving said soup or puree by disengaging said cooker unit from said base unit.
2. A soup or puree preparation system as described in clause 1, further comprising a set of said base units each holding a different set of said ingredients.
3. A soup or puree preparation system as described in clause 1 or clause 2 wherein said base unit further comprises cooking data storage means storing data defining a cooking process for said set of ingredients, and wherein
   said cooker unit further comprises reading means to read said cooking data storage means and control circuitry to operate said blender and heater to blend and heat said set of ingredients according to said cooking process for said set of ingredients.
4. A soup or puree preparation system as described in clause 1 or clause 2 wherein said base unit further comprises cooking data, and wherein
   said cooker unit further comprises means to input said cooking data, and
   wherein
   said cooker unit is configured to blend and cook said set of ingredients according to said cooking data.
5. A soup or puree preparation system as described in clause 3, wherein said cooking data storage means comprises one or more recesses and/or protrusions on said base unit, and wherein said reading means comprises one or more plungers coupled to one or more respective switches to detect said recesses and/or protrusions on said base unit.
6. A soup or puree preparation system as described in clause 3, wherein said cooking data storage means comprises a bar code and said reading means comprises an optical sensor to read said bar code.
7. A soup or puree preparation system as described in clause 3, wherein said cooking data storage means comprises an RFID chip, and said reading means comprises an RFID reader.
8. A soup or puree preparation system as described in clause 3, wherein said cooking data storage means comprises a magnetic strip, and said reading means comprises a magnetic strip reader.
9. A soup or puree preparation system as described in any preceding clause, wherein said motor-driven blender comprises a retractable blade.
10. A soup or puree preparation system as described in clause 9, wherein said retractable blade is moveable between a retracted position wherein said blade is substantially enclosed in a protective housing of said cooker unit and a deployed position wherein said blade is operable to blend said set of ingredients.
11. A soup or puree preparation system as described in clause 10, wherein said retractable blade moves between said retracted position and said deployed position dependent on activating said motor-driven blender.
12. A soup or puree preparation system as described in any preceding clause, wherein said electrical heater is located on or in a shaft of said motor-driven blender.
13. A soup or puree preparation system as described in any preceding clause wherein said cooker unit comprises an orientation detector to determine the orientation of said cooker unit, said control circuitry further controlling said blender and heater according to an orientation of said cooker unit determined by said orientation detector.
14. A soup or puree preparation system as described in clause 13, wherein said top unit further comprises an electrical hot plate to fry one or more of said set of ingredients, said electrical hot plate being mounted under an upper surface of said cooker unit, and wherein said control circuitry operates said electrical hotplate according to an orientation of said cooker unit determined by said orientation detector.
15. A soup or puree preparation system as described in any preceding clause wherein said base comprises an interlock to enable said blender and heater, said enabling dependent on said cooker unit being securely engaged with said base unit.
16. A container for the preparation of soup or puree, in particular for use in the soup or puree preparation system of clause 3, the container comprising a vessel for preparing soup or puree from a set of ingredients placed in said vessel,
   wherein said container further comprises cooking data storage means defining a cooking process for said set of ingredients placed in said vessel.
17. A container as described in clause 16, storing said set of ingredients placed in said container, and further comprising a cover over said set of ingredients placed and stored in said vessel.
18. A container as described in clause 16 or 17, wherein the cooking data storage means comprises:
   one or more recesses and/or protrusions on said base unit; or
   a bar code; or
   an RFID chip; or
   a magnetic strip.
19. A container for the preparation of soup or puree, in particular for use in the soup or puree preparation system of clause 3, the container comprising a vessel for preparing soup or puree, and a lid,
   wherein said lid is engageable with said vessel to form a seal with said vessel;
   and
   wherein said lid comprises a cap having a formation arranged to project down into said vessel away from said cap when said lid is engaged with said vessel;
   wherein said formation has an aperture for filling the vessel when said lid is engaged, and
   wherein said formation is configured such that when said lid is engaged with said vessel as the vessel is filled with liquid there is a liquid level below the top of the vessel at which an air pocket is formed between said formation and an inner wall of said vessel trapping air therebetween and inhibiting further filling of the vessel.
20. A container as described in clause 19, wherein said formation has the shape of an inverted cone truncated to form said aperture.
21. A container as described in clause 19 or 20, wherein a thickness of a side wall of said cone tapers towards said aperture.
22. A container as described in clause 19 or 20, wherein said lid further comprises a vent from said air pocket to an outer surface of the lid, and wherein said vent is covered by an openable seal.
23. A container as described in clause 19 or 20 wherein said lid further comprises a vent from said air pocket to an outer surface of the lid, said lid comprising a breakable region to form said vent.
24. A container as described in any one of clauses 19 to 23, further comprising an openable seal on an outer surface of said lid over said aperture of said formation.
25. A container as described in any one of clauses 19 to 24, wherein said lid is arranged to snap-fit onto said vessel to provide said seal.
26. A container as described in any one of clauses 19 to 25, further comprising cooking data storage means defining a cooking process for said set of ingredients placed in said vessel.
27. A container as described in clause 26, wherein the cooking data storage means comprises:
   one or more recesses and/or protrusions on said base unit; or
   a bar code; or
   an RFID chip; or
   a magnetic strip.
28. A container as described in any one of clauses 16 to 27 wherein said vessel is further useable for serving said soup or puree.
29. A soup or puree maker, in particular having an integrated blender and heater, for use with a container comprising a vessel for preparing soup or puree from a set of ingredients placed in said vessel, said vessel being further useable for serving said soup or puree,
   wherein said soup or puree maker comprises a motor-driven blender and an electrical heater located on or in a shaft of said blender to cook ingredients in said container via said shaft.
30. A soup or puree maker as described in clause 29, further comprising:
   reading means to read cooking data storage means from a container, said cooking data storage means storing cooking process data defining a cooking process for a set of ingredients, and
   a blender and heater controller having control circuitry to operate said blender and heater to blend and heat said set of ingredients food according to said cooking process data.
31. A soup or puree maker as described in clause 30, wherein said reading means comprises one or more plungers coupled to one or more respective switches to detect recesses and/or protrusions when engaged to a container comprising said one or more recesses and/or protrusions, said recesses and/or protrusions on said container storing said data defining a cooking process for a set of ingredients
32. A soup or puree maker, in particular having an integrated blender and heater as described in any one of clauses 29 to 31, further comprising a retractable blade moveable between a retracted position wherein said blade is substantially enclosed in a protective housing of said integrated heater and blender and a deployed position wherein said blade is operable to blend food products in said liquid.
33. A soup or puree making apparatus, in particular for use with a container,
   said container comprising a vessel for preparing soup or puree from a set of ingredients placed in said vessel, said vessel being further useable for serving said soup or puree, said container further comprising cooking data storage means defining a cooking process for said set of ingredients placed in said vessel,
   said soup or puree making apparatus comprising:
   a motor-driven blender and an electrical heater,
   reading means to read said cooking data storage means from said container, and
   a blender and heater controller having control circuitry to operate said blender and heater according to said cooking process data.
34. A soup or puree making apparatus as described in clause 33, wherein the container is as described in clause 19.
35. A method of controlling the depth to which a vessel is filled, the method comprising:
   providing a vessel with a lid, wherein the lid has a formation projecting down into the vessel and an aperture for filling the vessel;
   filling the vessel with liquid through said aperture until the liquid level rises to a level at which an air pocket is formed between the formation and an inner wall of the vessel inhibiting further filling of the vessel; and
   controlling the depth of said filling by controlling the depth which an air path through the formation to said aperture exists.
36. A method as described in clause 35, wherein said controlling comprises controlling a distance to which said formation projects down into said vessel.
37. A method as described in clause 34 or 35, further comprising venting said air pocket to permit further filling of the vessel.

## Claims

1. A soup or puree preparation system, comprising:
a base unit and a cooker unit,
said cooker unit comprising a motor-driven blender and an electrical heater,
said base unit comprising a cooking / serving vessel holding a set of ingredients and having a removable or breakable cover over said set of ingredients in said vessel,
wherein said base unit bears identification data for said set of ingredients,
wherein said base unit is adapted to engage with said cooker unit such that said cooker unit is useable to blend and heat said set of ingredients by means of said blender and heater to make a soup or puree from said set of ingredients, and
wherein said base unit is further useable for serving said soup or puree by disengaging said cooker unit from said base unit.

2. A soup or puree preparation system as claimed in claim 1 wherein said base unit further comprises cooking data storage means storing data defining a cooking process for said set of ingredients, and wherein
said cooker unit further comprises reading means to read said cooking data storage means and control circuitry to operate said blender and heater to blend and heat said set of ingredients according to said cooking process for said set of ingredients.

3. A soup or puree preparation system as claimed in claim 1 wherein said base unit further comprises cooking data, and wherein
said cooker unit further comprises means to input said cooking data, and
wherein
said cooker unit is configured to blend and cook said set of ingredients according to said cooking data.

4. A soup or puree preparation system as claimed in claim 2,
wherein said cooking data storage means comprises one or more recesses and/or protrusions on said base unit, and wherein said reading means comprises one or more plungers coupled to one or more respective switches to detect said recesses and/or protrusions on said base unit, or
wherein said cooking data storage means comprises a bar code and said reading means comprises an optical sensor to read said bar code, or
wherein said cooking data storage means comprises an RFID chip, and said reading means comprises an RFID reader, or
wherein said cooking data storage means comprises a magnetic strip, and said reading means comprises a magnetic strip reader.

5. A soup or puree preparation system as claimed in any preceding claim, wherein said motor-driven blender comprises a retractable blade.

6. A soup or puree preparation system as claim 5, wherein said retractable blade is moveable between a retracted position wherein said blade is substantially enclosed in a protective housing of said cooker unit and a deployed position wherein said blade is operable to blend said set of ingredients, in particular wherein said retractable blade moves between said retracted position and said deployed position dependent on activating said motor-driven blender.

7. A soup or puree preparation system as claimed in any preceding claim, wherein said electrical heater is located on or in a shaft of said motor-driven blender.

8. A soup or puree preparation system in any preceding claim wherein said cooker unit comprises an orientation detector to determine the orientation of said cooker unit, said control circuitry further controlling said blender and heater according to an orientation of said cooker unit determined by said orientation detector.

9. A soup or puree preparation system as claim 8, wherein said top unit further comprises an electrical hot plate to fry one or more of said set of ingredients, said electrical hot plate being mounted under an upper surface of said cooker unit, and wherein said control circuitry operates said electrical hotplate according to an orientation of said cooker unit determined by said orientation detector.

10. A soup or puree preparation system as claimed in any preceding claim wherein said base comprises an interlock to enable said blender and heater, said enabling dependent on said cooker unit being securely engaged with said base unit.

11. A soup or puree maker comprising an integrated blender and heater, in particular as claimed in any preceding claim, for use with a container comprising a vessel for preparing soup or puree from a set of ingredients placed in said vessel, said vessel being further useable for serving said soup or puree,
wherein said soup or puree maker comprises a motor-driven blender and an electrical heater located on or in a shaft of said blender to cook ingredients in said container via said shaft.

12. A soup or puree maker as claimed in claim 11, further comprising:
reading means to read cooking data storage means from a container, said cooking data storage means storing cooking process data defining a cooking process for a set of ingredients, and
a blender and heater controller having control circuitry to operate said blender and heater to blend and heat said set of ingredients food according to said cooking process data.

13. A soup or puree maker as claimed in claim 12, wherein said reading means comprises one or more plungers coupled to one or more respective switches to detect recesses and/or protrusions when engaged to a container comprising said one or more recesses and/or protrusions, said recesses and/or protrusions on said container storing said data defining a cooking process for a set of ingredients.

14. A soup or puree maker, comprising an integrated blender and heater as claimed in any one of claims 11 to 13, further comprising a retractable blade moveable between a retracted position wherein said blade is substantially enclosed in a protective housing of said integrated heater and blender and a deployed position wherein said blade is operable to blend food products in said liquid.

15. A soup or puree making apparatus, in particular as claimed in any preceding claim, for use with a container,
said container comprising a vessel for preparing soup or puree from a set of ingredients placed in said vessel, said vessel being further useable for serving said soup or puree, said container further comprising cooking data storage means defining a cooking process for said set of ingredients placed in said vessel,
said soup or puree making apparatus comprising:
a motor-driven blender and an electrical heater,
reading means to read said cooking data storage means from said container, and
a blender and heater controller having control circuitry to operate said blender and heater according to said cooking process data.
